# EUROPEAN PATENT APPLICATION

(11) **EP 1 724 863 A1**
(43) Date of publication of application: **22.11.2006**
(21) Application number: 05010605.3
(22) Date of filing: 17.05.2005
(51) Int. Cl.: H01M 8/02, H01M 8/08, H01M 4/88

(54) **Metal foam materials in alkaline fuel cells and alkaline electrolysers**

(71) Applicant: Abson, Nicholas M., 24510 Ste Alvere (FR)
(72) Inventor: Abson, Nicholas M., 24510 Ste Alvere (FR)

(57) **Abstract**

This invention describes the use of metal foam materials as electrodes, catalyst supports, and other components in alkaline (AFC) fuel cells and alkaline electrolysers. Metal foam is generally made from reticulated plastic foams. It has a very open porous structure, is light weight and possesses physical and mechanical properties suitable for fuel cell and electrolyser applications. The porous open structure of the metal foam material is ideally suited to the deposition of catalytically active materials by various coating techniques including vapour deposition, and electrochemical deposition. Although the exact microstructure of the metal foam material depends on many factors, it possesses key physical properties which are relevant to the invention described here, such as high electrical conductivity and high thermal conductivity. Moreover, the metal foam can be readily incorporated into structured layers for making electrode assemblies for fuel cells and electrolysers.

## Description

This invention describes the use of metal foam together with metal wool and metal felt as electrode components for fuel cells and electrolysers. Metals such as nickel, nickel alloys, stainless steel, nichrome, cobalt, silver, alloys of silver are specifically considered as examples of metal foam, wool, and felt suitable for the application in fuel cells and electrolysers. Alkaline fuel cells and alkaline electrolysers are specifically considered in this invention, but other types of fuel cells and electrolytes such as PEM can also be considered in the scope of the invention. The key properties of the metal foam materials for the application are that they have good electronic conductivity, high connected porosity, large surface area, and are mechanically soft (compliant). They also possess a high surface area which can be coated with a catalytically active material. The key components of the fuel cell and electrolysers are described first followed by a description of the invention and examples of its use.

### Background to the invention

Fuel cells are electrochemical devices which convert chemical energy into electrical energy by means of an electrochemical reaction between the fuel and an oxidant such as air or pure oxygen. In a typical fuel cell, hydrogen is often used as fuel and air is used as the oxidant and both are supplied to the fuel cell as gases fed from storage reservoirs. In order for the electrochemical reactions to take place, several key components are required. A single electrochemical cell comprises of two electrodes, namely the anode and the cathode, which are separated by an electrolyte. The anode forms the negative electrode and provides the surface on which the fuel (hydrogen) reacts. The cathode forms the positive electrode and provides the surface on which the oxidant (air) reacts. Generally a catalyst is required to accelerate the electrochemical reactions at both the anode and cathode. The electrolyte is the medium through which the ionic species generated by the electrochemical reactions at the electrodes are transported from one electrode to the other. This flux (current) of ions is exactly equivalent to the flux (current) of electrons produced by the cell at the terminals. The electrolyte may be either a liquid or a solid. In the case of the alkaline fuel cell, the electrolyte is a strong aqueous solution of potassium hydroxide. In the case of the proton exchange membrane fuel cells (PEM), the electrolyte is a solid polymer. However in both cases the electrolyte contains dissolved water. A working fuel cell consists of a stack of single cells connected together electrically. The type of connection depends upon the design. There are two basic concepts - mono-polar and bi-polar. In mono-polar designs, the cells are connected externally to the stack, while in bi-polar designs, the cells are connected internally using bi-polar interconnecting plates. Alkaline fuel cell systems have historically developed along the mono-polar route, but in this invention we are concerned principally with novel bi-polar designs.

In the fuel cell, the fuel (hydrogen) is supplied to the anode through a porous interface material called the gas diffusion layer (GDL). This layer is an integral part of the anode-electrode assembly and allows the gas to reach the active layer containing the catalyst where it reacts. Similarly, the air or oxidant is supplied to the cathode through a cathode gas diffusion layer.

Electrolysers are used in many industrial processes and operate on the principles of electrochemistry. In particular, the electrolysis of water provides a means of producing very pure hydrogen and very pure oxygen. Water electrolysis is a standard production method for making hydrogen for fuel cells due to its high purity level. There are many similarities between electrolyser technology and fuel cell technology and the basic electrochemical reactions are simply reversed. However, there are differences in the construction and design between the two processes. In the case of electrolysers, the system is optimised for the maximum output of hydrogen (and oxygen) whereas the fuel cell is optimised for maximum power production. Even so, there are many commonalities and similarities in the components used, such as the electrolyte, the catalysts, the electrodes and so forth.

Electrolysers are fuel cells in reverse. They produce pure hydrogen and oxygen by the electrolysis of water. An external voltage exceeding the open circuit voltage is applied from a power supply to the electrodes upon which water is decomposed. Hydrogen is produced on the cathode and oxygen is produced on the anode. In the alkaline electrolyser, hydrogen is generated on the cathode while oxygen is generated on the anode. The two gases are prevented from mixing either by the use of bi-polar plates or a membrane diaphragm. Nickel is generally used as the electrode material, while the active electrochemical layer is generally made from a carbon supported catalyst which is applied to the nickel electrode.

The electrode assembly for fuel cells is made of three basic components as described here. The first component is the gas diffusion layer (GDL). The GDL has the function of allowing the fuel gas (hydrogen) or oxidant (air) to diffuse from its supply chamber to the catalyst surface where it adsorbs, exchanges electrons and reacts. In a bi-polar design the gases are fed through channels incorporated in the surface of the bi-polar plate, so the plate acts both as a gas distribution system and an electrical interconnect between cells. One side of the bi-polar plate supplies the fuel (hydrogen) while the other side of the plate supplies the air (oxidant). The gas diffusion layers are bonded to each side of the bi-polar plate, one comprising the anode and the other comprising the cathode.

The gas diffusion layer (GDL) is normally made from a water repellent (hydrophobic) porous material. The purpose of making the gas diffusion layer water repellent is to prevent flooding of the electrode by water contained in the electrolyte, and especially water produced by the electrochemical reaction. In the case of the alkaline fuel cell, water is produced at the anode as a result of the reaction of the supplied hydrogen with the hydroxide ions contained in the electrolyte.

In the case of alkaline fuel cells of the mono-polar design, the gas diffusion layer can be made entirely out of a water repellent plastic cloth such as PTFE or Teflon, or alternatively a mixture of PTFE powder and a pore-former such as ammonium bicarbonate. In fuel cells of the bi-polar design, it is necessary for the gas diffusion layer to be made electronically conducting. This can be achieved by adding carbon or better still graphite to the PTFE /pore-former mix. This invention provides a novel way to make the gas diffusion layer.

The second component of the electrode assembly is the active layer (AL). This is normally a layer of material containing a catalyst, such as platinum supported on active carbon, and is usually applied or bonded to the side of the gas diffusion layer facing the electrolyte chamber. The active layer can be made by mixing the catalyst with PTFE and a pore former such as ammonium bicarbonate. It is necessary to impart electronic conductivity in the active layer as electrons are required in the electrochemical reactions talking place on the catalyst surfaces. This invention provides a novel way to make the active layer.

In the case of the alkaline fuel cell, the active layer is normally applied or bonded directly onto the gas diffusion electrode. In order for the catalyst to function effectively it is very important that it is in intimate contact with the electrolyte, and simultaneously in contact with the reactant gas (hydrogen on the anode and oxygen on the cathode). In order to achieve this three phase contact zone, it is very important to prevent flooding of the electrode assembly with water. This is the reason for using water repellent materials in the construction of the gas diffusion layer.

The third component of the electrode assembly is the current collector. In the case of the alkaline fuel cell, it is common to use a nickel mesh as current collector. In mono-polar designs this is usually embedded in the active layer, thus providing support for the electrode assembly as well as serving as the current collector.

The traditional methods for fabricating the electrode assembly use calendaring and rolling techniques combined with hot pressing and sintering. This invention provides a simpler and cheaper approach to cell fabrication. The electrode assembly for electrolysers is a similar to the fuel cell except that the gas diffusion layer provides a means for the evolved gases to be collected. In the case of alkaline electrolysers, a gas diffusion electrode is not normally required because the evolved gases can be collected in a separating tank.

### Description of the invention

We describe here the use of metal foam together with metal wool and metal felt as electrode components for fuel cells and electrolysers. Metals such as nickel, nickel alloys, stainless steel, nichrome, cobalt, silver, alloys of silver are specifically considered as examples of metal foam, wool, and felt suitable for the application in fuel cells and electrolysers. Alkaline fuel cells and alkaline electrolyses are specifically considered in this invention, but other types of fuel cells and electrolytes such as PEM can also be considered in the scope of the invention. This invention describes the use of metal foam as electrodes, current collectors and supports for gas diffusion layers.

Metal foam is generally manufactured from reticulated plastic foam, such as polyurethane foam. Reticulation is the process by which the membrane cells or "windows" between the strands in a foam structure are removed completely, leaving behind a skeleton of interconnected strands of plastic. There are two main ways of carrying out the reticulation process: one involving chemical dissolution of the excess material and the other involving an explosive removal of the excess material. This latter method produces a strand with smooth polished surfaces whereas the former method produces a rough strand surface. The reticulated material has a very low density and a very open porosity. The next stage of the process is to metallize the plastic strands. First, the reticulated foam structure is coated in a metal precursor and then the metal is deposited all over the plastic surface. This normally involves a high temperature sintering stage in which the plastic is completely burnt out by pyrolysis leaving behind a replica of the reticulated foam in metal. The industrial production of reticulated metal foam is advanced, and many metal alloys and foam structure can be made.

The physical properties of reticulated metal foam are very well suited to their use in fuel cells and electrolysers. Reticulated metal foam possesses high electronic conductivity, high thermal conductivity and very low resistance to fluid flow. Metal foam is flexible, easily cut and malleable, light weight (low density) and is becoming increasingly cost effective. Many metal foam alloys are available including pure nickel, nichrome, stainless steel, inconel, copper, cobalt, silver etc. The pore size and dimensions can be tailored to match any specific requirements.

### Example 1 Making electrodes for fuel cells and electrolysers from metal foam

In this example, a sheet of metal foam is cut to the required size using conventional means such as a guillotine, knife, scissors, shears etc. The area of the sheet is similar to that of the overall dimension of the completed electrode assembly. The thickness of the sheet is similar to the required thickness of the completed electrode assembly, which in the case of the alkaline fuel cell could be 1mm or less. One key property of reticulated metal foam is that it can be compressed to an exact thickness using calendaring techniques or by pressing. This is very compatible with the rolling, calendaring and pressing techniques used to make alkaline fuel cells. The sheet is then incorporated into the electrode assembly where it functions as the electrode and active layer combined. In this example, no additional active material is required. The high surface area of the metal foam provides a large number of active sites for the electrochemical reactions to take place. In the case of fuel cells, these reactions will be oxygen reduction on the cathode and hydrogen oxidation on the anode. In the case of electrolysers, these reactions will be hydrogen evolution on the cathode and oxygen evolution on the anode. In the case of alkaline fuel cells and alkaline electrolysers, nickel foam is particularly suitable. It can replace the use of conventional nickel mesh as the current collector in the electrode assembly while at the same time serving the dual role as the electrode.

### Example 2 Making electrodes for fuel cells from a metal foam with an added gas diffusion layer

In this example, a sheet of metal foam is cut to the required size using conventional means such as a guillotine, knife, scissors, shears etc. The area of the sheet is similar to that of the overall dimension of the completed electrode assembly. The thickness of the sheet is similar to the required thickness of the completed electrode assembly, which in the case of the alkaline fuel cell could be 1mm or less. One key property of reticulated metal foam is that it can be compressed to an exact thickness using calendaring techniques or by pressing. In this example, the metal foam is compressed to the desired thickness before attachment to the gas diffusion layer.

The gas diffusion layer (GDL) is made from a paste composed of Teflon, carbon and a pore former. The procedure for making the paste is described in several patents. In this example, the gas diffusion layer is made from a paste by calendaring the appropriate mass of paste between two sheets of grease proof paper. The final thickness of the rolled gas diffusion layer is less than 1mm. In a second stage, the gas diffusion layer is pressed onto the surface of the metal foam by calendaring the two components together in the rolling mill. This can then be followed by compression in a hydraulic press to produce the final electrode thickness. The metal foam structure provides a very good key upon which the gas diffusion layer can be attached. This results in a very good bond between the two components. There will be many more contact points with the metal foam than with conventional metal mesh. The foam provides a three dimensional bonding zone whereas the metal mesh provides a two dimensional bonding zone. For this reason the gas diffusion layer can be embedded into the metal foam, whereas such embedding is not as effective with metal mesh support.

The combined metal foam and gas diffusion layer is then incorporated into the fuel cell electrode assembly. In this example, the metal foam acts as both the current collector and the active layer where the electrochemical reactions take place. The high surface area of the metal foam provides actives sites for the reactions to take place. In example 4 described below, the metal foam is coated with a separate active layer.

### Example 3 Making electrodes for fuel cells and electrolysers from metal foam with an added active layer.

In this example, the surface of the metal foam are coated with an active catalytic material which increases the rate of electrochemical reactions on the electrodes. Methods used to apply a metallic catalyst layer to the surface of the foam include vacuum assisted vapour deposition, chemical vapour deposition, vapour deposition, evaporation, sputtering, electro-plating, electroless plating, spray coating, dip coating and any other technique that is commonly used to apply a metallic coating. Metals have the advantage of being readily vaporised, either by high temperature evaporation or vacuum assisted evaporation. In the case of high temperature evaporation, protection against oxidation of the metal can be achieved by using a blanket gas such as nitrogen or an inert gas such as argon. Examples of catalytically active metals include silver, silver alloys, nickel, nickel alloys, cobalt, cobalt alloys, iron, iron alloys etc. The sheet is then incorporated into the electrode assembly where it functions as the electrode. In a variation of the method non-metallic catalysts can also be applied by vapour deposition methods such as chemical vapour deposition and electrostatic assisted vapour deposition. Other coating methods such as sputtering, laser ablation, VPS, spray pyrolysis, dip coating can also be used to apply catalysts.

The high surface area of the catalytically coated metal foam provides a large number of active sites for the electrochemical reactions to take place. In the case of fuel cells, these reactions will be hydrogen oxidation on the anode and oxygen reduction on the cathode. In the case of electrolysers, these reactions will be hydrogen evolution on the cathode and oxygen evolution on the anode.

### Example 4 Making electrodes for fuel cells from a metal foam with an added active layer and an added gas diffusion layer

In this example, the electrode assembly is made from metal foam that has been coated with a layer of active catalysts as described in example 3. A sheet of the coated metal foam is cut to the required size using conventional means such as a guillotine, knife, scissors, shears etc. The area of the sheet is similar to that of the overall dimension of the completed electrode assembly. The thickness of the sheet is similar to the required thickness of the completed electrode assembly, which in the case of the alkaline fuel cell, could be 1mm or less. One key property of reticulated metal foam is that it can be compressed to an exact thickness using calendaring techniques or by pressing. In this example, the metal foam is compressed to the desired thickness before attachment to the gas diffusion layer. In a variation of the method, the active catalyst can be applied to the metal foam after it has been cut to the required size.

The gas diffusion layer is made from a paste composed of Teflon, carbon and a pore former. The procedure for making the paste is described in several patents. In this example, the gas diffusion layer is made from a paste by calendaring the appropriate mass of paste between two sheets of grease proof paper. The final thickness of the rolled gas diffusion layer is less than 1mm. In a second stage, the gas diffusion layer is pressed onto the surface of the metal foam by calendaring the two components together in the rolling mill. This can then be followed by compression in a hydraulic press to produce the final electrode thickness. The metal foam structure provides a very good key upon which the gas diffusion layer can be attached. This results in a very good bond between the two components. There will be many more contact points with the metal foam than with conventional metal mesh. The foam provides a three dimensional bonding zone whereas the metal mesh provides a two dimensional bonding zone. For this reason the gas diffusion layer can be embedded into the metal foam, whereas such embedding is not as effective with metal mesh support.

The combined metal foam and gas diffusion layer is then incorporated into the fuel cell electrode assembly. In this example the metal foam acts as the current collector while catalytic coating acts as the active layer where the electrochemical reactions take place. The high surface area of the metal foam combined with the catalyst provides a large number of actives sites for the reactions to take place.

### Example 5 Making a gas diffusion layer for fuel cells and electrolysers

In this example, a sheet of metal foam is cut to the required size using conventional means such as a guillotine, knife, scissors, shears etc. The area of the sheet is similar to that of the overall dimension of the completed electrode assembly. The thickness of the sheet is similar to the required thickness of the completed electrode assembly, which in the case of the alkaline fuel cell, could be 1mm or less. The sheet is then impregnated with a thin hydrophilic layer of a substance such as PTFE using a variety of techniques including dip coating from a liquid suspension, wet spraying, electrostatic spraying, doctor-blading, screen printing, pad printing, vapour deposition, vacuum deposition and any other coating technique that is commonly used to apply PTFE and similar plastic materials to a substrate.

### Example 6 Making an active anode layer for fuel cells and electrolysers from metal foam using traditional catalysts.

In this example, a sheet of metal foam is cut to the required size using conventional means such as a guillotine, knife, scissors, shears etc. The area of the sheet is similar to that of the overall dimension of the completed electrode assembly. The thickness of the sheet is similar to the required thickness of the completed electrode assembly, which in the case of the alkaline fuel cell could be 1mm or less. The sheet is then impregnated with the active anode catalyst. Traditionally platinum supported on high surface area carbon is used as the anode catalyst. In this case, such a catalyst can be applied using a variety of techniques including dip coating from a liquid suspension, wet spraying, electrostatic spraying, doctor-blading, screen printing, pad printing, vapour deposition, vacuum deposition and any other coating technique that is commonly used to coat a substrate.

### Example 7 Making an active cathode layer for fuel cells and electrolysers using traditional catalysts.

In this example, a sheet of metal foam is cut to the required size using conventional means such as a guillotine, knife, scissors, shears etc. The area of the sheet is similar to that of the overall dimension of the completed electrode assembly. The thickness of the sheet is similar to the required thickness of the completed electrode assembly, which in the case of the alkaline fuel cell could be 1mm or less. The sheet is then impregnated with the active cathode catalyst. Traditionally platinum supported on high surface area carbon is used as the cathode catalyst. In this case, such a catalyst can be applied using a variety of techniques including dip coating from a liquid suspension, wet spraying, electrostatic spraying, doctor-blading, screen printing, pad printing, vapour deposition, vacuum deposition and any other coating technique that is commonly used to coat a substrate.

### Example 8 Making an active anode layer for fuel cells and electrolysers using novel catalysts

In this example, a sheet of metal foam is cut to the required size using conventional means such as a guillotine, knife, scissors, shears etc. The area of the sheet is similar to that of the overall dimension of the completed electrode assembly. The thickness of the sheet is similar to the required thickness of the completed electrode assembly, which in the case of the alkaline fuel cell could be 1mm or less. The sheet is then impregnated with the active anode catalyst. In this example we use a novel catalyst which does not contain any platinum. Examples of alternative anode catalysts include nickel, Raney nickel, cobalt, borides and perovskite oxides In this case such a catalyst can be applied using a variety of techniques including electrochemical deposition, electroless deposition, dip coating from a liquid suspension, wet spraying, electrostatic spraying, doctor-blading, screen printing, pad printing, vapour deposition, vacuum deposition and any other coating technique that is commonly used to coat a substrate.

### Example 9 Making an active cathode layer for fuel cells and electrolysers using novel catalysts

In this example, a sheet of metal foam is cut to the required size using conventional means such as a guillotine, knife, scissors, shears etc. The area of the sheet is similar to that of the overall dimension of the completed electrode assembly. The thickness of the sheet is similar to the required thickness of the completed electrode assembly, which in the case of the alkaline fuel cell could be 1mm or less. The sheet is then impregnated with the active cathode catalyst. In this example we use a novel catalyst which does not contain any platinum. Examples of alternative cathode catalysts include nickel, cobalt, silver, borides and perovskite oxides. In this case, such a catalyst can be applied using a variety of techniques including electrochemical deposition, electroless deposition, dip coating from a liquid suspension, wet spraying, electrostatic spraying, doctor-blading, screen printing, pad printing, vapour deposition, vacuum deposition and any other coating technique that is commonly used to coat a substrate.

### Example 10 Making a combined gas diffusion layer and active anode or cathode layer for fuel cells and electrolysers

In this example a single sheet of metal foam is used to make both the gas diffusion electrode and the active layer. This can be done by taking a sheet of metal foam as explained in example 1. However, in this case, the foam is first made hydrophobic by the PTFE treatment described in example 5, followed by impregnation of one side of the gas diffusion layer with the active catalyst. The method used to apply the catalyst is the same as those described in examples 3, 4, 6, 7, 8 and 9. The completed gas diffusion layer and active anode layer is ready to be incorporated in the fuel cell or electrolyser.

### Example 11 Making a graded gas diffusion layer for fuel cells and electrolysers

In this example, the fabrication process used to make the metal foam is modified to provide a sheet of porous metal foam with a graded porosity. On one side of the sheet there are coarse pores while on the other side of the sheet there are fine pores. In between the two sides, the porosity varies from coarse to fine. In operation, the coarse side of the sheet faces the bi-polar plate and the gas side of the fuel cell or electrolyser, while the fine side of the sheet faces the electrolyte side of the fuel cell or electrolyser. In order for this system to function it is necessary to impart hydrophobic properties to the coarse side by impregnating the foam with PTFE or some other hydrophobic agent. On the fine side of the foam it is necessary to incorporate the catalyst. This can be done using coating techniques as described in examples 3, 4, 6, 7, 8 and 9. In a variation of this application, the geometry is reversed and the coarse side of the foam is impregnated with the catalyst and faces the electrolyte side of the fuel cell or electrolyser while the fine side of the foam is made hydrophobic and faces the gas side of the fuel cell or electrolyser. The graded gas diffusion layer can be used on both the anode and cathode sides of the fuel cell or the electrolyser.

## Claims

1. Porous metal foam provides an excellent alternative to the conventional use of nickel mesh as the electrode support and current collector in fuel cells and electrolysers. Metal foam is easy to cut, handle and post-process.

2. Porous metal foam has a high electrical conductivity, high thermal conductivity, low density, and imparts very little resistance to fluid flow. These properties make metal foam very suitable for use as electrodes in alkaline fuel cells and alkaline electrolysers.

3. Porous metal foam provides a much better surface for adhesion of the gas diffusion layer than metal meshes. This is due to the three dimensional skeletal network of metal strands which make up the structure of the reticulated metal foam. The improved bonding that metal foam provides means that the gas diffusion layer is less likely to debond or delaminate during the service life of the fuel cell or electrolyser.

4. Porous metal foam can be readily compressed or squashed. This property allows very precise electrode thicknesses to be made, enabling accurate electrode geometries to be maintained with low cost manufacturing machinery. The compressibility also enables the pore structure of the foam to be adjusted to optimise the performance of the electrode, especially with respect to gas diffusion and liquid electrolyte absorption. The soft or compliant property of the metal foam also assists in making good electrical contact with bipolar plates and interconnects. This will enable lower overall resistance to be achieved in the stack leading to enhanced performance.

5. The open structure of the reticulated metal foam provides very little resistance to fluid flow. This means that coating methods such as vapour deposition and electroplating can give a uniform layer throughout the foam structure. This also means that active layers can be readily deposited throughout the entire structure of the metal foam. These properties make metal foam particularly attractive for use as electrodes in fuel cells and electrolysers.

6. The low density of metal foam will lead to a lower weight in any stack design, which will lead to high specific power levels for fuel cells.

7. The open three dimensional skeletal structure of metal foam makes it suitable for bonding to plastic components by processes such as injection moulding due to the fact that the molten plastic can flow into the edges of the foam component, thereby giving a very strong bond with good adhesion.

8. The open three dimensional skeletal structure of metal foam makes the flow of fluid in the lateral plane of a metal sheet significant. In order to prevent loss of liquid such as electrolyte in the alkaline fuel cells, it is necessary to seal the edges. This can be done with a resin or rubber such as EDM which can be applied to the edges as a liquid and then cured to produce a solid edge seal.
